# EUROPÄISCHE PATENTANMELDUNG

(11) **EP 4 800 396 A1**
(43) Veröffentlichungstag der Anmeldung: **02.09.2026**
(21) Anmeldenummer: 26157428.9
(22) Anmeldetag: 10.02.2026
(51) Int. Cl.: G01P 3/38, B07C 5/36, G01P 3/40, G06V 10/62, G06V 20/52, G06V 10/25, B07C 5/34

(54) **VORRICHTUNG ZUR OPTISCHEN SORTIERUNG BEWEGTER OBJEKTE MIT GESCHWINDIGKEITSBESTIMMUNG**

(30) Priorität: 26.02.2025 DE 102025107267
(71) Anmelder: Baumer Inspection GmbH, 78467 Konstanz (DE)
(72) Erfinder: Diehl, Hans-Peter, 78464 Konstanz (DE); Villing, Wolfgang, 78467 Konstanz (DE)
(74) Vertreter: Strauss, Steffen

(57) **Zusammenfassung**

Vorgeschlagen wird eine Vorrichtung (1) zur optischen Erfassung und Sortierung bewegter Objekte (2), umfassend eine Transportstrecke (4), eine Beleuchtungsvorrichtung (8), welche Lichtpulse in periodisch wiederkehrenden Abfolgen aussendet, und eine Kamera (K) mit einem monochromen Flächensensor (9) mit frei konfigurierbaren Bildbereichen (10). Zur Kosteneinsparung bei hoher Präzision ist eine Auswerteeinrichtung (11) dazu ausgebildet, die Konfiguration (36) der Bildbereiche (10) vorzunehmen, indem sie mindestens zwei Bereiche von den jeweils mindestens drei Bildbereichen (10) als Geschwindigkeitsmessbereiche (21) und mindestens einen Bereich von den jeweils mindestens drei Bildbereichen (19) als Inspektionsbereich festlegt, und deren Abstände zueinander entlang der Transportstrecke (4) zu erfassen, eine Bilderkennung durchzuführen, sowie eine Geschwindigkeitsbestimmung und eine Objektbewertung anhand der Informationen durchzuführen.

## Beschreibung

Die Erfindung betrifft eine Vorrichtung zur optischen Erfassung und Sortierung bewegter Objekte nach dem Oberbegriff des Anspruchs 1 sowie ein entsprechendes Verfahren zur optischen Erfassung und Sortierung bewegter Objekte.

Aus dem Stand der Technik ist zum Beispiel aus der DE 10 2021 109 078 B3 eine Kameravorrichtung zur Erfassung eines relativ zur Kameravorrichtung bewegten Objektstromes bekannt, welche einen Geometrieerfassungssensor umfasst, um interessierende Bereiche zu bestimmen und die Auswertung der Bilddaten auf diese Bereiche zu beschränken.

Aufgabe der Erfindung ist es, eine Vorrichtung zur optischen Erfassung und Sortierung bewegter Objekte bereitzustellen, welche bei hoher Präzision dennoch mit kostengünstigem apparativem Aufwand arbeiten kann.

Die Aufgabe wird, ausgehend von einer Vorrichtung bzw. einem Verfahren der eingangs genannten Art, durch die kennzeichnenden Merkmale des Anspruchs 1 sowie mit einem entsprechenden Verfahren zur optischen Erfassung und Sortierung bewegter Objekte gelöst.

Durch die in den abhängigen Ansprüchen genannten Maßnahmen sind vorteilhafte Ausführungen und Weiterbildungen der Erfindung möglich.

Die erfindungsgemäße Vorrichtung zur optischen Erfassung und Sortierung bewegter Objekte verwendet eine Transportstrecke, auf oder in der die Objekte bewegt werden, eine Beleuchtungsvorrichtung zur Beleuchtung der Transportstrecke, welche dazu ausgebildet ist, Lichtpulse in periodisch wiederkehrenden Abfolgen auszusenden, sowie einer Kamera mit einem monochromen Flächensensor mit wenigstens drei frei konfigurierbaren Bildbereichen.

Die Objekte, die untersucht werden, können einzeln oder gehäuft, regelmäßig oder unregelmäßig angeordnet die Transportstrecke durchlaufen. Sie können zum Beispiel auf einem Fließband fahren, mittels eines Luftkanals transportiert, über eine Rutsche gleiten oder eine Fall- oder Flugstrecke durchlaufen. Es kann sich bei den Objekten auch um einen Schüttgutstrom oder um einen Produktstrom handeln.

Die Beleuchtungsvorrichtung arbeitet mit Lichtpulsen, die periodisch ausgesandt werden. Dadurch wird ein zeitliches Raster geschaffen, weil die Frequenz, mit der die Lichtpulse ausgesandt werden, bekannt ist.

Der Flächensensor in der Kamera ist vorteilhafterweise monochrom ausgebildet, d.h. es können Kosten gegenüber der Verwendung teurer Prismenkameras oder von Kameras mit Farbsensoren eingespart werden.

Bildbereiche des monochromen Sensors (wie z.B. die später für die Geschwindigkeitsmessung ausgewählten und konfigurierten Geschwindigkeitsmessbereiche oder die für die Sortierung ausgewählten und konfigurierten Inspektionsbereiche) können als Bildblöcke oder nur als Bildzeilen konfiguriert werden. Diese müssen sich nicht über die gesamte Breite des Flächensensors erstrecken, sondern können auch schmaler sein. Diese Blöcke, die Zeile bzw. die Zeilen sind in der Matrix des Flächensensors frei positionierbar.

Eine Ausführungsvariante besteht darin, die Bildbereiche so groß zu konfigurieren, dass eine Verarbeitung schon mit den Bildausschnitten der Einzelbereiche möglich ist. Die Abfolge von Bildbereichen, die mit dem Flächensensor aufgenommen werden, können direkt analysiert werden, wobei sich in der Abfolge und durch die Anordnung der Bereiche zeigt, wie sich z.B. Positionen von Objekten zeitlich ändern. Eine weitere, präferierte Ausführungsvariante besteht darin, die einzeln aufgenommenen Bildzeilen oder Bildblöcke so zu verwenden und aneinander zu reihen, dass daraus kontinuierliche Bilder entstehen. Dies entspricht der Arbeitsweise einer Zeilenkamera. Jeder Bereich erzeugt ein "Zeilenkamera-Bild". Die Verarbeitung erfolgt dann im Anschluss anhand von Abschnitten aus diesen kontinuierlichen Bildern. Auch bei dieser Variante sind die zeitlichen Abläufe bekannt und können genauso für weitere Berechnungen verwendet werden.

Das gleiche gilt auch für einen Inspektionsbereich. Dieser ist bzw. diese sind in der Matrix aus Bildpunkten des Flächensensors frei positionierbar. Ein Inspektionsbereich kann z.B. nur eine Bildzeile umfassen oder sich über mehrere Bildzeilen erstrecken. Ein Inspektionsbereich kann aus einem zusammenhängenden Bereich oder aus zwei oder mehr getrennten Bereichen bestehen. Denkbar ist auch, dass Bildbereiche mit beabstandeten Bildzeilen festgelegt werden. Auch für den Inspektionsbereiche / die Inspektionsbereiche gibt es zwei Ausführungsvarianten. Eine, bei der die Bereiche groß genug konfiguriert werden, dass die Verarbeitung schon anhand einzelner Bereiche ausgeführt werden kann. Bei der anderen Variante werden die Bildblöcke / Bildzeilen aneinandergereiht (Zeilenkamera-Prinzip) und erst danach findet eine Verarbeitung in Abschnitten aus den kontinuierlichen Bildern statt.

Aufgrund der unterschiedlichen Gegebenheiten beim Transport der Objekte können die Geschwindigkeitsmessbereiche an unterschiedlichen Stellen auf dem Flächensensor angeordnet sein bzw. unterschiedlich große Bereiche erfordern. Daher ist es vorteilhaft, wenn bei einer Ausführungsform der Erfindung die Bildbereiche von der Auswerteeinrichtung frei konfiguriert werden können.

Wenn eine Bildzeile nicht vollständig ausgelesen werden muss oder bei der Konfiguration Bildzeilen nicht ausgelesen werden, die zwischen anderen auszulesenden Bildzeilen liegen, kann die zum Auslesen der Bildbereiche benötigte Zeit verkürzt werden, sodass auch eine Echtzeit-Auswertung erleichtert werden kann.

Eine Auswerteeinrichtung wertet die Messdaten für eine Zuordnung von Objekteigenschaften zu den erfassten Objekten für ein anschließende Sortierung aus. Sie ermöglicht es zum Beispiel, einzelne Objekte mit bzw. ohne bestimmte Objekteigenschaften auszusortieren. Dazu muss jedoch auch die Geschwindigkeit bekannt bzw. bestimmbar sein. Denn Aufnahme, Auswertung und Aussortierung finden nicht gleichzeitig statt. Nach Erfassung eines Objekts erfolgt zunächst die Auswertung und im Anschluss die Aussortierung. Zwischen optischer Erfassung und möglicher Aussortierung liegt aber eine gewisse Zeitspanne, in welcher das Objekt weitertransportiert wird. Um das auszusortierende Objekt lokalisieren zu können, muss dessen Bewegung bzw. die Geschwindigkeit sowie die seit Erfassung verstrichene Zeit genau bekannt sein.

Das Aussortieren bzw. Ausschleusen kann zum Beispiel über eine Weiche oder, wenn die Objekte z.B. eine Flug- oder Fallstrecke durchlaufen, durch eine Luftdüse erfolgen. Mittels einer Luftdüse können die Objekte auch beispielsweise von einem Transportband entfernt werden.

Im Rahmen der Erfindung wurde erkannt, dass es in der Regel ausreicht, die Geschwindigkeit mit der Kamera zu ermitteln. Es ist nur in besonderen Fällen nötig, die Geschwindigkeit mit zusätzlichen Hilfsmitteln zu bestimmen, indem zum Beispiel die Geschwindigkeit eines Transportbands, etwa durch Drehgeber oder Laufrad oder berührungslos über Laser-Doppler ermittelt wird. Bei einer Fall- oder Flugstrecke ist die Geschwindigkeit im Allgemeinen unbekannt und muss zuerst bestimmt werden. Bei Objekten mit unterschiedlichen Eigenschaften (Größe, Gewicht, Oberfläche) ist die Geschwindigkeit unterschiedlich. Aber auch auf einem Transportband muss die Geschwindigkeit eines Objekts nicht exakt mit der Geschwindigkeit des Transportbands übereinstimmen, vor allem im Bereich von Bandübergängen. Zudem können die Objekte auch über Rutschen laufen oder in einem Kanal transportiert werden. Die Geschwindigkeitsverteilung der Objekte kann entsprechend auch über die Breite der Transportstrecke bzw. des Transportkanals variieren. Im Allgemeinen ist die Geschwindigkeit in einer Strömung in der Mitte eines Kanals höher als außen. Das Geschwindigkeitsprofil kann quer zur Transportrichtung in Bezug zur Mittelachse entlang der Transportstrecke symmetrisch verlaufen. In der Regel wird sich in der Praxis aber eine zumindest leichte Asymmetrie ergeben, da die Strömung sich deutlich von einer laminaren Strömung unterscheiden kann.

Gemäß der Erfindung können dem Flächensensor mehrere Funktionen zukommen. Demzufolge können durch die Erfindung Kosten verringert werden, weil der Flächensensor gleichzeitig für die Geschwindigkeitsmessung und die Bestimmung von Objekteigenschaften zum Sortieren benutzt wird. Der Flächensensor weist dazu einen Detektionsbereich auf, der frei konfigurierbar in einzelne Bildbereichen aufgeteilt werden kann, die wie separate Sensoren / Kameras arbeiten können. Vorteilhafterweise ist der Flächensensor als Matrix aus Bildpunkten bzw. Pixeln ausgebildet. Vor allem dadurch, dass die Pixel einzeln ausgelesen werden können, können über den Flächensensor hinweg verschiedenen Bildbereiche frei ausgewählt, positioniert und in ihrer Größe festgelegt werden.

Zwei oder mehr dieser Bildbereiche werden erfindungsgemäß für die Geschwindigkeitsbestimmung eingesetzt. Der Abstand der Bildbereiche zueinander bzw. der Abstand der mit den entsprechenden Bildbereichen erfassten Stellen auf der Transportstrecke, die jeweils auf die Geschwindigkeitsmessbereiche abgebildet werden, ist bestimmbar bzw. bekannt. Mit Hilfe der Zeit, die durch das zeitliche Raster der Aufnahmen gegeben ist, lässt sich somit die Geschwindigkeit einzelner Objekte bestimmen.

Die Konfigurationskriterien können so gewählt werden, dass die Geschwindigkeitsmessbereiche auf dem Flächensensor möglichst weit auseinander liegen, weil messtechnisch auf diese Weise die geringsten Messfehler für die Zeit- und auch Wegmessung zu erwarten sind. Die Konfigurationskriterien können sich auch danach richten, an welcher Stelle optimale Positionen vorliegen. Hierzu führt die Auswerteeinrichtung anhand einer zeitlichen Folge von Aufnahmen des Flächensensors einen Bildvergleich bzw. eine Korrelation übereinstimmender Bildausschnitte durch, wobei die Bildausschnitte Teile der aufgenommenen Bilder sind. Ergibt der Bildvergleich bzw. die Korrelation, dass es sich zu verschiedenen Zeitpunkten um dieselben Bildausschnitte handelt, so können diese Bildausschnitte zur Geschwindigkeitsbestimmung grundsätzlich herangezogen werden.

Bei einem Ausführungsbeispiel der Erfindung kann die Auswerteeinrichtung als computerimplementiere Vorrichtung ausgebildet sein und rechnergestützt die Auswertung durchführen. Entsprechend ist es auch möglich, die Geschwindigkeitsmessbereiche ständig neu festzulegen. Die Geschwindigkeitsmessungen können in regelmäßigen zeitlichen Abständen erfolgen. Denkbar ist auch, zu Beginn des Sortiervorgangs eine Messung oder Messreihe durchzuführen und den Sortiervorgang mit diesen Ergebnissen für die Geschwindigkeit fortzuführen, sofern die Geschwindigkeit als hinreichend konstant angesehen werden kann.

Gemäß einer Ausführungsform ist die Auswerteeinrichtung dazu ausgebildet ist, die Bildbereiche und/oder die Geschwindigkeitsmessbereiche jeweils als wenigstens eine Bildzeile, insbesondere als Teil wenigstens einer Bildzeile oder als wenigstens eine vollständige Bildzeile festzulegen. Es ist also nicht notwendig, dass ein Bildbereich vollständige Zeilen beinhaltet oder dass die Bildzeile am Rand des Flächensensors beginnt oder endet.

Die Bilderkennung kann auch mit Hilfe einer künstlichen Intelligenz erfolgen, oder es kann stattdessen zum Beispiel auch ein Machine-Learning-Prozess verwendet werden. Als Eingangsdaten können zum Beispiel Umrisse, Konturen, Farben und andere Oberflächeneigenschaften als Messdaten zugeführt werden. Es werden dann entweder Objekte mit denselben Umrissen, Konturen, Farben oder dergleichen gesucht. Zuvor kann auch berechnet werden, ob und wie ein Objekt sich seit der Aufnahme gedreht hat, weswegen die Kontur dann in der Regel abweicht.

Auf diese Weise kann die Auswerteeinrichtung bei einer Ausführungsvariante dazu ausgebildet sein, wenigstens einen Bereich als Inspektionsbereich festzulegen. Für die Geschwindigkeitsmessung ist es grundsätzlich gleichgültig, ob unter den Objekten auch Fremdobjekte oder Fremdstoffe sind, die aussortiert werden müssen. Anders verhält es sich bei der Sortierung. Andere Fremdobjekte oder Fremdstoffe haben andere Eigenschaften, welche zum Erkennen der Fremdobjekte bzw. Fremdstoffe genutzt werden können, gerade hinsichtlich ihrer optischen Eigenschaften wie beispielsweise Farbe, Reflexionseigenschaften. Diese optischen Eigenschaften können zum Beispiel von unterschiedlichem Material oder Güteeigenschaften herrühren.

Gemäß einer Weiterbildung der Erfindung werden außer den Geschwindigkeitsmessbereichen auch Inspektionsbereiche festgelegt. Diese werden separat von den Geschwindigkeitsmessbereichen festgelegt. Es ist denkbar, dass genau ein Inspektionsbereich festgelegt wird, beispielsweise so, dass dieser zwischen zwei Geschwindigkeitsmessbereichen liegt. Es ist aber sonst prinzipiell auch jede andere Aufteilung möglich. Die in den Inspektionsbereichen erfassten Objekte werden mit bestimmten Objekteigenschaften (z.B. der Helligkeit) erfasst. Je nach Objekteigenschaften oder genauer je nach detektierten Eigenschaften werden die Objekte sortiert. Typischerweise werden Fremdobjekte bzw. Fremdstoffe erkannt, sodass sie anschließend aussortiert werden können.

Die Erfindung ermöglicht es, einen monochromen Flächensensor zu verwenden. Dennoch ist bei einer Ausführungsvariante die Beleuchtungsvorrichtung dazu ausgebildet, dass die Lichtpulse multispektral und/oder hyperspektral und/oder alternierend ausgebildet sind. Gewissermaßen kann damit das technische Vorurteil überwunden werden, dass für eine präzise Messung zur Erfassung der (farbigen) Objekteigenschaften eine weiße, breitbandige Beleuchtung mit möglichst komplettem Lichtspektrum, und eine Farbkamera oder sogar eine Farb-Prismenkamera zur Erfassung der Farb- und Reflexionseigenschaften der Objekte erforderlich ist. Stattdessen kommt ein weitaus günstigerer monochromer Flächensensor zum Einsatz. Die Beleuchtungsfarben können in zeitlichen Abständen oder auch in räumlich unterschiedlichen Bereichen variieren. Da bekannt ist, mit welcher Farbe zu welchem Zeitpunkt beleuchtet wird, kann diese den Messdaten beim Auslesen des Sensors und Übertragen an die Auswertevorrichtung zugeordnet werden. In vorteilhafter Weise erfolgt deshalb bei einer Ausführungsform der Erfindung eine pixelsynchrone Aufnahme bzw. eine Synchronisierung der Aufnahmen unterschiedlicher Wellenlängen.

Bei einer vorteilhaften Ausführungsform der Erfindung wird daher die Geschwindigkeit genutzt, die unterschiedlichen spektralen Aufnahmen der Objekte, die zu unterschiedlichen Zeiten aufgenommen wurden, örtlich zu synchronisieren, da die Farben nacheinander in fester Abfolge durch die Lichtpulse zum Anstrahlen bzw. Ausleuchten der Objekte verwendet werden.

Der Wellenlängenbereich, mit dem beleuchtet wird, kann sehr verschieden sein. Er kann zum Beispiel einfarbig oder Rot, Blau und Grün oder multispektral sein, also mehrere Spektralkanäle umfassen. Er kann auch hyperspektral sein, also noch feiner unterteilt sein als bei einer multispektralen Erfassung. Ferner können auch Wellenlängen außerhalb des sichtbaren Bereiches, nämlich im ultravioletten oder infraroten Bereich verwendet werden. Die Reihenfolge kann, wie bereits beschrieben, alternierend ausgebildet sein, also eine wiederkehrende Abfolge darstellen.

Bei einer Ausführungsform kann die Beleuchtungsvorrichtung dazu eingerichtet sein, dass die Abfolgen von Lichtpulsen eine festgelegte Folge von wenigstens zwei Lichtpulsen mit jeweils einer bestimmten spektralen Verteilung aufweisen.

Insbesondere kann die Beleuchtungsvorrichtung dazu ausgebildet sein, dass die Lichtpulse unterschiedlicher spektraler Verteilungen Lichtpulse unterschiedlicher Farben sind, wobei die Lichtpulse aus dem sichtbaren Spektrum und/oder aus dem ultravioletten Bereich und/oder aus dem Infrarotbereich stammen. Die Auswahl der Wellenlängen und die Art der Erfassung (z.B. multispektral oder hyperspektral) hängt u.a. auch von den Objekten, deren Farbe, der zu erwartenden Oberflächeneigenschaften, der Reflexion usw. ab.

Die Oberflächeneigenschaften der Objekte, unter anderem die Reflexionseigenschaften der Objektoberflächen bei unterschiedlicher spektraler Beleuchtung führen dazu, dass je nach Beleuchtung unterschiedliche Anteile sehr unterschiedliche Intensitäten abstrahlen. Der monochrome Flächensensor wird entsprechend unterschiedliche Intensitäten / Helligkeiten erfassen. Dadurch, dass die Beleuchtungsfarben jedoch zeitlich sich in vorgegebener Weise abwechseln, ist der Aufnahme des Flächensensors entsprechend die Beleuchtungsfarbe zugeordnet. So kann die Auswerteeinrichtung prüfen, welche Kriterien bei der Zuordnung gewisser Objekteigenschaften erfüllt sind.

In vorteilhafter Weise wird die Auswerteeinrichtung so konfiguriert bzw. ausgebildet, dass für die Geschwindigkeitsbestimmung nur eine der Beleuchtungsfarben verwendet wird. Am besten wird die Farbe verwendet, bei der sich die stabilste Geschwindigkeits-bestimmung ergibt. Es kann sich bei den Farben auch um solche außerhalb des sichtbaren Spektralbereichs handeln. Alle weiteren Beleuchtungsfarben kommen in dem Fall für die Geschwindigkeitsmessung nicht zum Einsatz. Auf diese Weise kann die Auswertung der Geschwindigkeitsbestimmung grundsätzlich vereinfacht werden. Es spricht allerdings technisch auch nichts dagegen, die Geschwindigkeit in mehreren oder in allen Farbkanälen zu bestimmen. Außer, dass mehr Rechenzeit benötigt wird und evtl. die Hardware entsprechend ausgelegt sein muss. Zur Geschwindigkeitsmessung muss im Grunde auch nur ein Bildausschnitt wiedererkannt werden. Es müssen dafür keine Objekte erkannt werden bzw. Objekteigenschaften zugeordnet werden.

Je nach Ausführungsvariante kann die Transportstrecke ein Förderband, ein Transportkanal oder eine Flugstrecke sein. Der Bereich der Transportstrecke, in dem die Aufnahmen gemacht werden, kann einen segmentweise aktiv schaltbaren / beleuchteten Hintergrund aufweisen, d.h. die Aufnahmen werden von diesem veränderlichen Hintergrund hinterlegt. Auf diese Weise können zum Beispiel Objekte mit bestimmten Eigenschaften optisch besser wahrgenommen oder bewusst ausgeblendet werden. Besitzt ein Objekt in seinem Soll-Zustand eine gewisse Farbgebung, kann es für die Sortierung von Vorteil sein, das Objekt im Soll-Zustand auszublenden, was dadurch erleichtert wird, dass der Hintergrund die gleiche Farbe erhält wie das Objekt im Soll-Zustand. Der Hintergrund kann entsprechend beleuchtet werden. Alle Fremdstoffe oder Fremdobjekte, die aussortiert werden sollen, können trotzdem erfasst werden, weil ihre Farbe von der des Hintergrundes (und der Objekte im Soll-Zustand) abweicht.

Die Art und Weise der Hintergrundbeleuchtung kann variieren. In der Regel wird das Ziel sein, den Hintergrund möglichst homogen auszuleuchten.

Vorteilhafterweise kann in Transportrichtung nur eine Kamera mit einem monochromen Flächensensor verwendet werden, was auch mit Kostenvorteilen verbunden ist. Ein als Matrix eingeteilter Sensorbereich wird gemäss der Erfindung in Bildbereiche aufgeteilt und konfiguriert, sodass diese wie separate Kameras, Zeilenkameras, bzw. Sensoren funktionieren. Dadurch sind auch zwischen den eingeteilten Bildbereichen keine größeren Abstände, wie dies beim Einsatz mehrerer separater Kameras in der Regel der Fall wäre.

Mit Hilfe einer Aussortierungsvorrichtung können die Objekte gemäß ihrer Objekteigenschaften sortiert werden. Insbesondere können Fremdstoffe aussortiert werden. Die Aussortierungsvorrichtung kann bei dieser Ausführungsform von der Auswerteeinrichtung kontrolliert werden. Die Aussortierung selbst kann im Fall einer Fall- oder Flugstrecke, welche die Objekte durchlaufen, durch eine Luftdüse oder, z. B. bei einer Transportstrecke auf einem Band oder über eine Rutsche, durch eine Schleuse erfolgen, was auch von den Objekteigenschaften und der zu erwartenden Häufigkeit, wie viele Objekte die Transportstrecke verlassen sollen, abhängt. Bei einer Sortierung von Baumwolle kann zum Beispiel eine Luftdüse verwendet werden, da diese als RohBaumwolle in Flockenform vorliegt.

Bei einer Ausführungsvariante wird die die Geschwindigkeitsbestimmung in langsameren Zyklen als die Erkennung und Zuordnung von Objekteigenschaften durchgeführt. Dies liegt daran, dass ständig einzelne Objekte sortiert werden müssen, die Geschwindigkeit sich aber im Allgemeinen nicht so schnell ändert, sodass es nicht notwendig ist, diese in schnelleren Zyklen zu erfassen.

Bei einer besonders bevorzugten Weiterbildung der Erfindung kann eine Pixelsynchronität der einzelnen Aufnahmen bewegter Objekte, gerade bei Verwendung mehrerer Farbkanäle, hergestellt werden, um die Objekteigenschaften zu erkennen und zuzuordnen. Die Pixelsynchronität ist wichtig für die richtige Bewertung / Sortierung der Objekte. Wenn die Farben örtlich asynchron wären, dann könnte man das Objekt nicht korrekt nach deren Farbe sortieren. Vor allem entstehen Farbsäume, und diese Farbsäume bestehen aus Farben, die das Objekt in Wirklichkeit in der Regel nicht vorweist.

Die erfindungsgemäße Vorrichtung zur optischen Erfassung und Sortierung bewegter Objekte kann entsprechend zur Durchführung eines erfindungsgemäßen Verfahrens eingesetzt werden.

Grundsätzlich wird zur Durchführung des erfindungsgemäßen Verfahrens eine Transportstrecke, welche die Objekte durchlaufen, bereitgestellt. Die Transportstrecke bzw. die Objekte, welche die Transportstrecke durchlaufen, werden mit Lichtpulsen beleuchtet. Die Lichtpulse werden in periodisch wiederkehrenden Abfolgen, etwa mit einer Sequenz bestimmter Farben bzw. Wellenlängen, ausgesandt.

Je nach Ausführungsform kann der Hintergrund, vor dem die Objekte vorbeilaufen, auch segmentweise beleuchtet werden, um so bestimmte Objekte auszublenden oder überhaupt hervorzuheben. Haben Objekte mit den gewollten Eigenschaften eine bestimmte Farbe (z.B. cremefarbene Baumwollflocken), so kann der Hintergrund auch in derselben Farbe ausgeleuchtet werden, um diese Objekte auszublenden und nur die Fehlstoffe zu erfassen. Dies ist auch vorteilhaft, weil oftmals weniger Fehlstoffe vorkommen als Objekte mit den gewollten Eigenschaften, sodass weniger Informationen verarbeitet werden müssen und die Auswertung schneller erfolgen kann oder weniger Rechenkapazität zur Verfügung gestellt werden muss.

Bereitgestellt wird ebenfalls eine Kamera mit einem monochromen Flächensensor. Die Zuordnung der Farben der Objekte zu den jeweiligen Beleuchtungsfarben erfolgt über die Steuerung. Bildaufnahme und Beleuchtung werden gemeinsam angesteuert. Die Auswerteeinrichtung verfügt daher über die Information, welche Farbe der Lichtpuls zum entsprechenden Zeitpunkt besaß, und ordnet die ausgelesenen Bilddaten dem entsprechenden Farbkanal zu. Das ist die Umkehrung zur gebräuchlichen Farbbildverarbeitung. Oft werden Beleuchtungen mit breitbandigem, weißem Licht verwendet und die Trennung in Farben mittels Farbfilter vor den Bildsensoren / den einzelnen Pixeln ausgeführt. Im vorliegenden Fall erreicht man die Trennung in Farben durch eine unterschiedlich farbige Beleuchtung. Deshalb genügt es auch, dass der Flächensensor monochrom arbeitet, womit Kosten eingespart werden können. Es besteht zudem die Möglichkeit besondere Lichtfarben einzusetzen oder viele unterschiedliche Lichtfarben, ohne gleich eine komplett neue Kamera entwickeln zu müssen.

Bei einer Ausführungsform kann in einem weiteren Verfahrensschritt der übrige Bereich des Flächensensors, der noch nicht als Geschwindigkeitsmessbereich deklariert wurde, als Inspektionsbereich oder als mehrere Inspektionsbereiche festgelegt werden. Hierin werden die Objekteigenschaften geprüft.

Dementsprechend ist es vorteilhalft, wenn ein Objekt beim Durchlaufen des Inspektionsbereichs mit Licht aller in der Abfolge an Lichtpulsen vorkommenden Farben / Wellenlängen beschienen wird, um möglichst viele Objekteigenschaften zu erfassen.

### Ausführungsbeispiel:

Ausführungsbeispiele der Erfindung sind in den Zeichnungen dargestellt und werden nachstehend unter Angabe weiter Einzelheiten und Vorteile näher erläutert. Im Einzelnen zeigen:
- Fig. 1:: eine schematische Darstellung einer Vorrichtung zur optischen Erfassung und Sortierung bewegter Objekte gemäss der Erfindung,
- Fig. 2:: eine schematische Darstellung der Geschwindigkeitsermittlung,
- Fig. 3:: ein Beispiel für ein Geschwindigkeitsprofil über die Breite einer Transportstrecke,
- Fig. 4-9:: Beispiele für Konfigurationen des Flächensensors in Bildbereiche,
- Fig. 10:: eine schematische Darstellung eines Verfahrens zur optischen Erfassung und Sortierung bewegter Objekte gem. der Erfindung, sowie
- Fig. 11:: eine schematische Darstellung der optischen Abbildung.

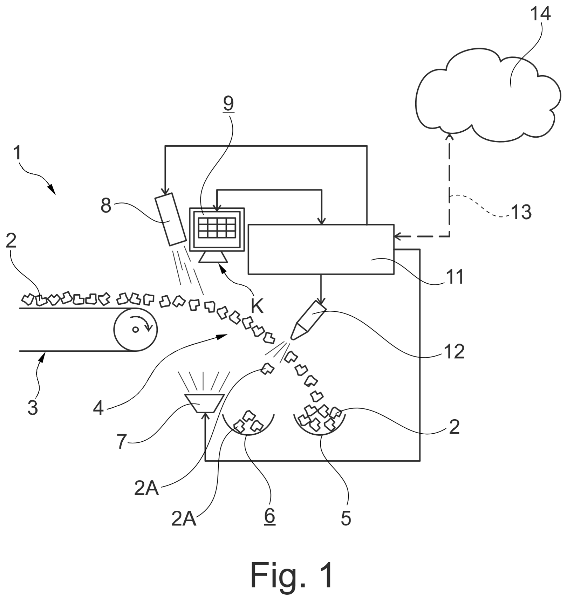

Figur 1 zeigt eine Vorrichtung 1 zur optischen Erfassung und Sortierung bewegter Objekte 2. Die Objekte 2 werden zunächst auf einem Förderband 3 befördert und durchlaufen hinter dem Förderband 3 eine Transportstrecke, hier eine Flugstecke 4, bis sie in einem Sammelkorb 5 landen, zumindest, solange die Objekte 2 keinen Ausschuss 2A bilden. Die Ausschuss-Objekte 2A besitzen andere Eigenschaften, mit denen sie sich von den Objekten 2 unterscheiden und die optisch detektierbar sind. Die Ausschuss-Objekte 2A sind auszusortieren und werden in einem separaten Sammelbehälter 6 aufgefangen.

Hinter den Objekten 2 kann eine Hintergrundbeleuchtung 7 montiert sein, so dass ein einheitlicher Hintergrund für die Aufnahmen der Objekte 2 geschaffen ist. Diese Hintergrundbeleuchtung 7 ist je nach Bedarf auch pulsbar, sie kann mit unterschiedlichen Farbsequenzen angesteuert werden. Die Hintergrundbeleuchtung 7 kann auch nur einzelne Erfassungsbereiche der Kamera K abdecken.

Außerdem ist eine weitere Beleuchtungsvorrichtung 8 vorgesehen, mit der Lichtpulse erzeugt werden können. Mit den Lichtpulsen werden die Objekte 2 beleuchtet. Das von den Objekten 2 reflektierte Licht wird mit Hilfe einer Kamera K mit einem monochromen Flächensensor 9 detektiert. In der Zeichnung von Figur 1 sind beide, Beleuchtungsvorrichtung 8 und Flächensensor 9 oberhalb der Transportstrecke 4 angeordnet, da es sich um eine schematische Prinzip-Skizze handelt. Sie können auch in einer anderen Anordnung zum Einsatz kommen.

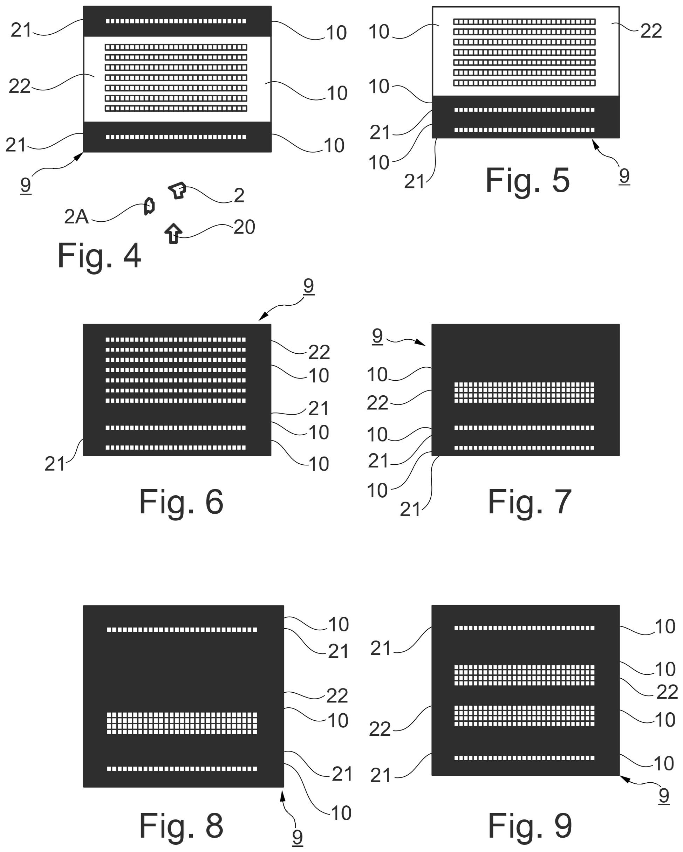

Die Beleuchtungsvorrichtung 8 erzeugt eine festgelegte Abfolge von Lichtpulsen unterschiedlicher Farbe, die sich periodisch wiederholt. Der Flächensensor 9 besteht aus einer Matrix an Pixeln, die einzeln auslesbar sind. Die Matrix als Detektionsbereich ist in drei oder mehr Bildbereiche 10 einteilbar (Figuren 4 bis 9). Mit einigen der Bildbereiche 10 wird, wie unten noch beschrieben ist, die Geschwindigkeitsbestimmung durchgeführt, mit anderen Bildbereichen 10, werden die Objekteigenschaften bestimmt.

Zur Regelung ist eine Auswerteeinrichtung 11 vorgesehen. Sie kontrolliert die Beleuchtungsvorrichtung 8, die Hintergrundbeleuchtung 7, als auch die Aufnahme des monochromen Flächensensors 9 und empfängt die Bilddaten des Flächensensors 9. Die Auswerteeinrichtung 11 steuert die Farben der Lichtpulse, bzw. deren Abfolge. Die empfangenen Bilddaten werden in entsprechende Farbkanäle aufgeteilt. Die wiederum werden über die Geschwindigkeit synchronisiert. Damit wird eine Pixel-Synchronität der einzelnen Farben erreicht und es kann eine Objekterkennung der Objekte 2, als auch die Bestimmung der jeweiligen Objekteigenschaften erfolgen.

Die Auswerteeinrichtung 11 vergleicht die gewonnenen Objekteigenschaften mit den zu erwartenden Objekteigenschaften. Sind diese Eigenschaften nicht vorhanden bzw. unterscheiden sie sich mehr als konfiguriert, dann handelt es sich statt eines regulären Objekts 2 um einen Fehlstoff, also um ein Ausschuss-Objekt 2A. Zum Aussortieren ist im vorliegenden Fall eine Aussortierungsvorrichtung 12 mit einer Luftdüse vorgesehen, welche von der Auswerteeinrichtung 11 dann aktiviert wird, wenn das als solches von der Ausweiteeinrichtung 11 identifizierte Ausschuss-Objekt 2A nach Berechnung der Auswerteeinrichtung 11 unter Zuhilfenahme der bestimmten Geschwindigkeit die entsprechende Stelle passiert, an der sich die Aussortierungsvorrichtung 12 befindet.

Die Geschwindigkeitsbestimmung kann eine hohe Rechenleistung erfordern. Falls die Auswerteeinrichtung 11 dies nicht allein bewältigt, kann sie zum Beispiel über eine Netzwerkanbindung 13 an eine Cloud 14 oder eine Großrechenanlage angeschlossen sein.

Auch die Objekteigenschaften müssen über die Auswerteeinrichtung 11 geprüft werden. Auch hierzu kann die Anbindung 13 an eine Cloud 14 hilfreich sein. Denkbar ist im Übrigen auch, dass nur während einer ersten Einlernphase die Anbindung 13 zu der Cloud 14 benötigt wird. Denn im Betrieb muss eine Echtzeit-Prüfung und sofort eine Entscheidung zum Sortieren der Objekte 2 getroffen werden. Neben einem Machine-Learning-Verfahren zum Einlernen kann auch zur Auswertung eine KI genutzt werden, die über die Cloud 14 abrufbar ist.

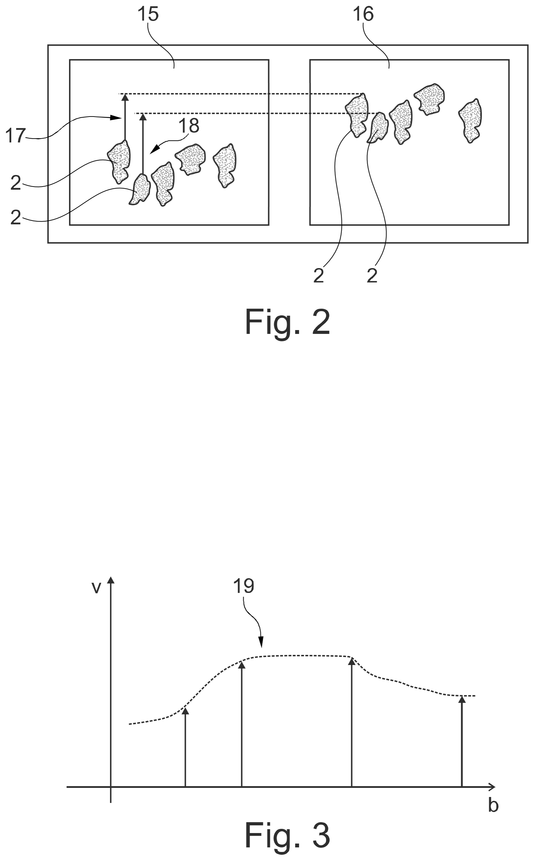

Figur 2 zeigt zwei Bildausschnitte 15 und 16, deren Bilddaten aus zwei Geschwindigkeitsbereichen stammen und die für die Geschwindigkeitsbestimmung verwendet werden. Die Auswerteeinrichtung 11 erkennt anhand von Berechnungen, dass die Bildteile in beiden Bildausschnitten 15, 16 weitgehend dieselben sind. Diese sind nur positionsversetzt, da sich die abgebildeten Objekte 2 im zeitlichen Verlauf bewegt haben. Eines der Objekte 2 ist in dieser Zeit um die Strecke 17 vorangeschritten, das andere um die Strecke 18. Aufgrund des zeitlichen Rasters, mit dem in definierten Zeitabständen Lichtpulse in unterschiedlichen Farben, aber mit fester Abfolge erzeugt werden, ist auch der zeitliche Abstand in den Bildausschnitten 15, 16 bekannt. Da auch der örtliche Abstand über die Konfiguration und die optische Abbildung bekannt ist, kann die Auswerteeinrichtung 11 die jeweilige Geschwindigkeit bestimmen bzw. errechnen. Die Auswertung kann an einzelnen erfassten Bildbereichen erfolgen, oder anhand von Ausschnitten aus einem Datenstrom, bei dem vorher Bildbereiche / Bildzeilen aneinandergereiht wurden, ähnlich einer Zeilenkamera.

Figur 3 zeigt einen typischen Verlauf eines empirisch bestimmen Geschwindigkeitsprofils 19, das den Verlauf der Geschwindigkeit v von Objekten 2 über die Breite b einer Transportstrecke 4 zeigt. Ein solches Profil 19 kann z.B. dann vorliegen, wenn die Objekte 2 als Schüttgut über eine Rutsche oder als Produktstrom in einem Kanal gefördert werden, wobei die Strömungsgeschwindigkeit etwa in der Mitte erwartungsgemäß höher ist als am Rand.

Die Figuren 4 bis 9 zeigen jeweils Flächensensoren 9 mit unterschiedlichen Einteilungen in Bildbereiche 10 und mit gegebenenfalls unterschiedlichen Hintergrundbeleuchtungen 7 (hier schematisch dargestellt, da die Hintergrundbeleuchtung nur segmentweise vorgesehen ist oder zeitlich unterschiedlich angesteuert wird.)

Figur 4 zeigt einen Flächensensor 9 mit einem matrizenförmigen Detektionsbereich, der in drei Bereiche aufgeteilt ist. Die in Figur 4 dargestellte Aufteilung entspricht einer für eine Vielzahl von Anwendungsfällen vorteilhaften Aufteilung. Die Transportrichtung der Objekte 2, 2A entlang der Transportstrecke verläuft in allen Figuren 4 bis 9 in vertikaler Richtung 20, hier von unten nach oben. In dieser Richtung 20 beginnt und endet der Flächensensor 9 mit jeweils einem Geschwindigkeitsmessbereich 21, in diesem Fall konfiguriert mit jeweils einer Zeile. Dazwischen liegt ein Inspektionsbereich 22, der zu Detektion von Objekteigenschaften dient. In vorteilhafter Weise liegen die beiden Geschwindigkeitsmessbereiche 21 möglichst weit auseinander, sodass Strecke und Zeitabstand für die Geschwindigkeitsmessung bezüglich des Flächensensors 9 maximal groß sind. Statistisch kann ein Messfehler damit minimiert werden. Ferner erstrecken sich die Geschwindigkeitsmessbereiche 21 über die gesamte Breite des Flächensensors 9, sodass im Grunde alle Objekte 2, 2A und mit ihnen das Geschwindigkeitsprofil 19 erfasst werden können. Für die Geschwindigkeitsmessbereiche 21 ist keine Hintergrundbeleuchtung 7 vorgesehen, bzw. ist diese in diesem Fall nicht aktiv. Anders verhält es sich im Inspektionsbereich 22, der sich in Richtung 20 über einen weiteren Bereich erstreckt und aus mehreren Zeilen besteht, die jeweils einen Abstand zueinander aufweisen. Sprich vorhandene Zeilen zwischen den aktiven Zeilen werden nicht verwendet, Diese Konfiguration dient dazu mit einer Aufnahme den aufgenommenen Bereich zu vergrößern und gleichzeitig die Auslesegeschwindigkeit des Flächensensors 9 zu erhöhen.

In Figur 5 sind im Unterschied zu Figur 4 die Geschwindigkeitsmessbereiche 21 direkt am Anfang hintereinander angeordnet, was den Nachteil mit sich bringen kann, dass die Zeitspanne, wann ein Objekt 2 zur Geschwindigkeitsmessung erfasst wird, und auch die Distanz zwischen diesen Erfassungsorten gering ist, sodass der Messfehler höher sein wird als bei einer Ausführung nach Figur 4.

Figur 6 entspricht Figur 5, nur besitzen die Geschwindigkeitsmessbereiche 21 und der Inspektionsbereich 22 in diesem Fall keine Hintergrundbeleuchtung 7, bzw. ist sie nicht aktiv geschaltet.

Die Aufteilung nach Figur 7 entspricht der nach Figur 6, genauso die Hintergrundbeleuchtung 7, allerdings ist der Inspektionsbereich 22 als Bildblock konfiguriert. Im Vergleich sieht man auch, dass bei den Ausführungen gem. den Figuren 4 bis 6 zwischen den auszulesenden Zeilen immer Abstände vorlagen, d.h. dazwischen gibt es in der Matrix-Anordnung Pixelzeilen, die nicht ausgelesen werden. Zwar verschlechtert sich dadurch grundsätzlich die Bildqualität, aber der Ausleseprozess an sich kann dadurch wesentlich verkürzt werden, sodass eine Echtzeit-Verarbeitung durch die Auswerteeinrichtung 11 erleichtert wird.

Die Anordnung nach Figur 8 ähnelt wiederum der von Figur 4, der Inspektionsbereich 22 ist jedoch als Bildblock konfiguriert. Die Geschwindigkeitsmessbereiche liegen weit auseinander. Die Hintergrundbeleuchtung 7 im Inspektionsbereich ist nicht vorhanden oder nicht aktiv geschalten.

Figur 9 zeigt schließlich eine Variante, bei der zwei Inspektionsbereiche 22 konfiguriert sind, die aus zwei separaten, nicht unmittelbar aneinanderhängenden Bildblöcken bestehen.

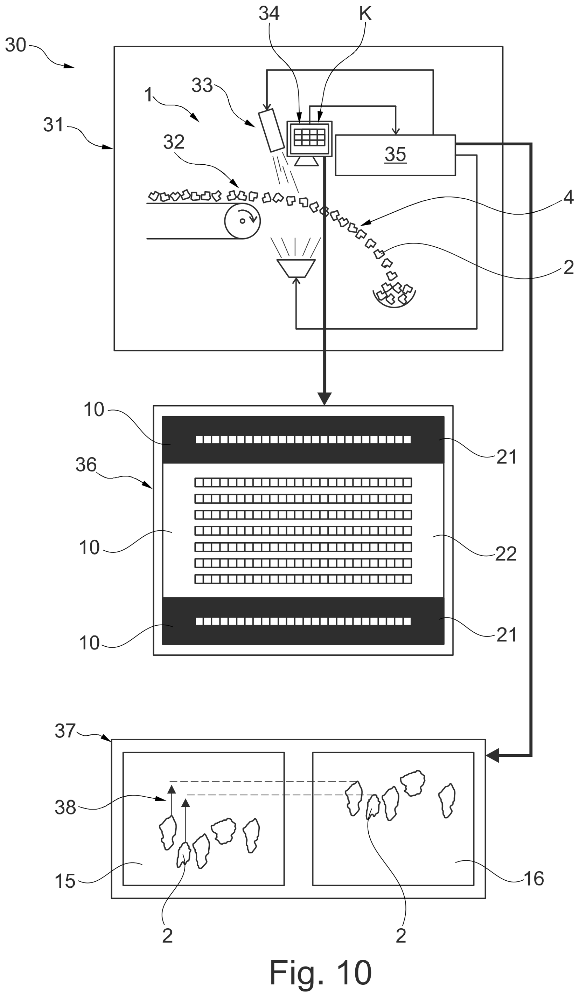

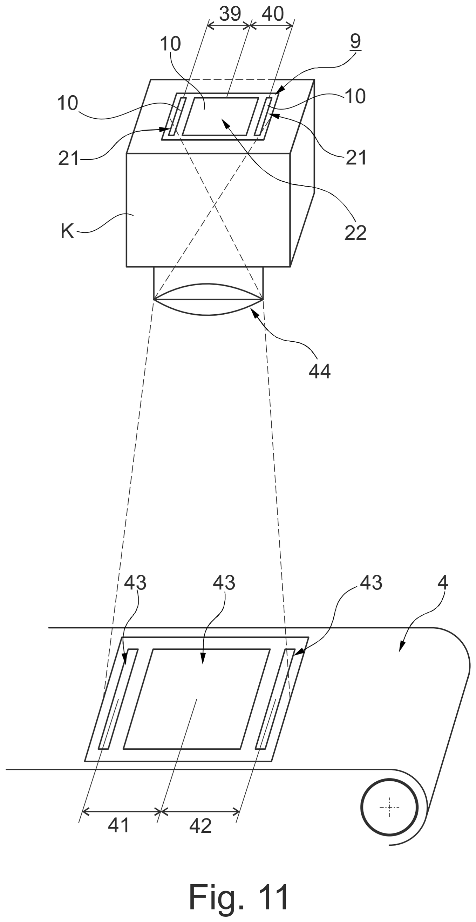

Figur 10 stellt das Verfahren 30 zur optischen Erfassung und Sortierung bewegter Objekte 2 unter Verwendung 31 einer Vorrichtung 1 mit den Verfahrensschritten:
a. Bereitstellung 32 einer Transportstrecke 4, auf der oder in der die Objekte 2 bewegt werden,
b. Beleuchtung 33 der Transportstrecke 4, wobei dazu Lichtpulse in periodisch wiederkehrenden Abfolgen ausgesandt werden,
c. Bereitstellen 34 einer Kamera K mit einem monochromen Flächensensor, dessen Detektionsbereich in wenigstens drei frei konfigurierbare Bildbereiche einteilbar ist, wobei eine Auswertung 35 wie folgt durchgeführt wird:
d. Konfiguration 36 der Bildbereiche 10, indem sie wenigstens zwei Bereiche von den jeweils wenigstens drei Bildbereichen 10 als Geschwindigkeitsmessbereiche 21 und indem sie wenigstens einen Bildbereich von den jeweils wenigstens drei Bildbereichen 10 als Inspektionsbereich festlegt, deren Abstände 41 und 42 (Figur 11) zueinander entlang der Transportstrecke 4 anhand der Konfiguration und der optischen Abbildung festgelegt sind,
e. Erkennung 37 in den Bilddaten 15 und 16 aus den Geschwindigkeitsmessbereichen anhand eines Bildvergleichs und/oder einer Korrelation übereinstimmender Bildbereiche und Berechnung der Abstände von als weitgehend ähnlichen identifizierten Bildausschnitten, und
f. Bestimmung 38 der Geschwindigkeit anhand der Aufnahmezeitpunkte und der berechneten Abstände entlang der Transportstrecke 4
g. Erkennung in den Bilddaten aus dem Inspektionsbereich / den Inspektionsbereichen anhand einer Bildverarbeitung Objekte und deren Objekteigenschaften zu erfassen und zuzuordnen, die Objekte 2 nach deren Objekteigenschaften zu sortieren, vorzugsweise Fremdobjekte und/oder Fremdstoffe unter den Objekten 2 zu erkennen und auszusortieren.

In Figur 11 ist über einer Transportstrecke 4 eine Kamera K mit einem Flächensensor 9 angebracht. Es wird dargestellt, welche Bereiche 43 auf der Transportstrecke 4 über eine Optik 44 anhand der optischen Abbildung auf die Bildbereiche 10 des Flächensensors 9 abgebildet werden. Durch die Kamera K und die optische Abbildung sind auch die Abstände 41 und 42 der Bereiche auf der Transportstrecke 4 vorgegeben, welche nach Abbildung auf den Flächensensor 9 den Abständen 39 und 40 zwischen den Bildbereichen 10, also den beiden Geschwindigkeitsmessbereichen 21 und dem Inspektionsbereich 22 jeweils zueinander entsprechen.

## Patentansprüche

1. Vorrichtung (1) zur optischen Erfassung und Sortierung bewegter Objekte (2), umfassend:
a. eine Transportstrecke (4), auf der oder in der Objekte (2) bewegt werden,
b. eine Beleuchtungsvorrichtung (8) zum Beleuchten der Objekte (2) auf der oder in der Transportstrecke (4), wobei die Beleuchtungsvorrichtung (8) dazu ausgebildet ist, Lichtpulse in periodisch wiederkehrenden Abfolgen auszusenden,
c. eine Kamera (K) mit einem monochromen Flächensensor (9) zum Aufnehmen und Abbilden von optischen Abbildungen auf dem Flächensensor (9), dessen Detektionsbereich in wenigstens drei frei konfigurierbare Bildbereiche (10) einteilbar ist, **dadurch gekennzeichnet, dass** eine Auswerteeinrichtung (11) vorgesehen ist,
welche dazu ausgebildet ist:
i. die Konfiguration (36) der Bildbereiche (10) in Größe und Position vorzunehmen, indem sie wenigstens zwei Bildbereiche von den jeweils wenigstens drei Bildbereichen (10) als Geschwindigkeitsmessbereiche (21) und indem sie wenigstens einen Bildbereich von den jeweils wenigstens drei Bildbereichen (10) als Inspektionsbereich festlegt, deren Abstände (41,42) zueinander entlang der Transportstrecke (4) anhand der Konfiguration und der optischen Abbildung festgelegt sind,
ii. eine Bilderkennung (37), die mit den Bilddaten aus den mindestens zwei der Geschwindigkeitsmessbereiche (21) einen Bildvergleich und/oder eine Korrelation übereinstimmender Bildausschnitte als Teile der Bildbereiche (10) durchführt, um daraus Abstände (17,18) von mit dem Bildvergleich und/oder der Korrelation als weitgehend ähnlich identifizierten Bildausschnitten zu berechnen,
iii. eine Geschwindigkeitsbestimmung (38) anhand der Aufnahmezeitpunkte und der berechneten Abstände (17,18) durchzuführen,
iv. eine Bilderkennung, die mit den Bilddaten aus dem mindestens einem Inspektionsbereich eine Bildverarbeitung durchzuführt, um Objekte und deren Objekteigenschaften zu erfassen und zuzuordnen, die Objekte (2) nach deren Objekteigenschaften zu sortieren, vorzugsweise Fremdobjekte (2A) und/oder Fremdstoffe unter den Objekten (2) zu erkennen und auszusortieren.

2. Vorrichtung (1) nach Anspruch 1, **dadurch gekennzeichnet, dass** die Auswerteeinrichtung (11) dazu ausgebildet ist, die Bildbereiche (10) jeweils
a. als wenigstens eine Bildzeile und/oder
b. als Teil wenigstens einer Bildzeile und/oder
c. als rechteckigen Bereich und/oder
d. als Bereich mit beabstandeten Bildzeilen und/oder
e. als Bereich aus Teilen von beabstandeten Bildzeilen und/oder
f. als beabstandete rechteckige Bereiche
festzulegen.

3. Vorrichtung (1) nach einem der vorgenannten Ansprüche, **dadurch gekennzeichnet, dass** die Beleuchtungsvorrichtung (8) dazu ausgebildet ist, dass:
a. die Lichtpulse unterschiedlicher spektraler Verteilungen sind, insbesondere Lichtpulse
i. aus dem sichtbaren Spektrum, insbesondere unterschiedlicher Farben, insbesondere Rot, Blau oder Grün und/oder
ii. aus dem ultravioletten Bereich und/oder
iii. aus dem Infrarotbereich.
b. die unterschiedlichen Lichtpulse multispektral und/oder hyperspektral ausgebildet sind.

4. Vorrichtung (1) nach einem der vorgenannten Ansprüche, **dadurch gekennzeichnet, dass** die Beleuchtungsvorrichtung (8) dazu ausgebildet ist, dass die Abfolgen von Lichtpulsen eine festgelegte alternierende Folge von wenigstens zwei Lichtpulsen mit jeweils einer bestimmten spektralen Verteilung aufweisen.

5. Vorrichtung (1) nach einem der vorgenannten Ansprüche, **dadurch gekennzeichnet, dass** die Auswerteeinrichtung (11) und/oder die Beleuchtungsvorrichtung (8) dazu ausgebildet und/oder konfiguriert ist, für die Geschwindigkeitsbestimmung (38) nur eine Ausbildung der Lichtpulse zu verwenden.

6. Vorrichtung (1) nach einem der vorgenannten Ansprüche, **dadurch gekennzeichnet, dass** die Transportstrecke (4) von einem segmentweise aktiv schaltbaren / leuchtenden Hintergrund (7) hinterlegt ist, um die Objekteigenschaften der Objekte (2) optisch besser zu erfassen und/oder um Objekte (2) mit bestimmten Eigenschaften optisch auszublenden.

7. Vorrichtung (1) nach einem der vorgenannten Ansprüche, **dadurch gekennzeichnet, dass** die Beleuchtungsvorrichtung (8) gegenüber der Transportstrecke (4) in Auflichtbeleuchtung angeordnet ist.

8. Vorrichtung (1) nach einem der vorgenannten Ansprüche, **dadurch gekennzeichnet, dass** die Auswerteeinrichtung (11) dazu ausgebildet ist, die unterschiedlich spektralen Aufnahmen der Objekte (2), die zu unterschiedlichen Zeiten aufgenommen wurden, örtlich zu synchronisieren und Pixelsynchronität zu erzeugen.

9. Vorrichtung (1) nach einem der vorgenannten Ansprüche, **dadurch gekennzeichnet, dass** eine Aussortierungsvorrichtung (12) vorgesehen ist, um Objekte (2) mit bestimmten Objekteigenschaften, insbesondere Fremdstoffe (2A), auszusortieren, welche von der Auswerteeinrichtung (11) kontrollierbar ist, indem anhand der bestimmten Geschwindigkeit bestimmte Objekte (2) nach der Sortierung, insbesondere die erkannten Fremdstoffe (2A), aussortiert werden, wobei vorzugsweise die Aussortierungsvorrichtung (12):
a. eine Luftdüse (12) umfasst, welche im Bereich der Transportstrecke (4) angeordnet ist oder
b. eine Schleuse umfasst, welche dazu ausgebildet ist, je nach Objekteigenschaften entsprechende Objekte (2, 2A) auszuschleusen.

10. Vorrichtung (1) nach einem der vorgenannten Ansprüche, **dadurch gekennzeichnet, dass** die Auswerteeinrichtung (11) dazu ausgebildet ist, die Geschwindigkeitsbestimmung (38) in langsameren Zyklen als die Erkennung und Zuordnung von Objekteigenschaften durchzuführen.

11. Verfahren (30) zur optischen Erfassung und Sortierung bewegter Objekte (2), insbesondere durch Verwendung (31) einer Vorrichtung (1) nach einem der vorgenannten Ansprüche, umfassend folgende Verfahrensschritte:
a. Bereitstellung (32) einer Transportstrecke (4), auf der oder in der die Objekte (2) bewegt werden,
b. Beleuchtung (33) der Transportstrecke (4), wobei dazu Lichtpulse in periodisch wiederkehrenden Abfolgen ausgesandt werden,
c. Bereitstellen (34) einer Kamera (K) mit einem monochromen Flächensensor (9), dessen Detektionsbereich in wenigstens drei frei konfigurierbare Bildbereiche einteilbar ist, **dadurch gekennzeichnet, dass** eine Auswertung (35) wie folgt durchgeführt wird:
d. Konfiguration (36) der Bildbereiche (10), indem sie wenigstens zwei Bereiche von den jeweils wenigstens drei Bildbereichen (10) als Geschwindigkeitsmessbereiche (21) und indem sie wenigstens einen Bildbereich von den jeweils wenigstens drei Bildbereichen (10) als Inspektionsbereich festlegt, deren Abstände (41,42) zueinander entlang der Transportstrecke (4) anhand der Konfiguration und der optischen Abbildung festgelegt sind,
e. Erkennung (37) in den Bilddaten aus den Geschwindigkeitsmessbereichen anhand eines Bildvergleichs und/oder einer Korrelation übereinstimmender Bildbereiche und Berechnung der Abstände von als weitgehend ähnlichen identifizierten Bildausschnitten, und
f. Bestimmung (38) der Geschwindigkeit anhand der Aufnahmezeitpunkte und der berechneten Abstände entlang der Transportstrecke (4)
g. Erkennung in den Bilddaten aus dem Inspektionsbereich / den Inspektionsbereichen anhand einer Bildverarbeitung Objekte und deren Objekteigenschaften zu erfassen und zuzuordnen, insbesondere die Objekte (2) nach deren Objekteigenschaften zu sortieren, vorzugsweise Fremdobjekte (2A) und/oder Fremdstoffe unter den Objekten (2) zu erkennen und auszusortieren.
